# EUROPÄISCHE PATENTANMELDUNG

(11) **EP 3 818 803 A1**
(43) Veröffentlichungstag der Anmeldung: **12.05.2021**
(21) Anmeldenummer: 20194288.5
(22) Anmeldetag: 03.09.2020
(51) Int. Cl.: A01B 79/00, G06Q 10/04, G06Q 10/06

(54) **ASSISTENZSYSTEM ZUR ERMITTLUNG EINER GEWINNPROGNOSE EINES LANDWIRTSCHAFTLICHEN FELDES**

(30) Priorität: 09.11.2019 DE 102019130269
(71) Anmelder: 365FarmNet Group KGaA mbh & Co KG, 33428 Harsewinkel (DE)
(72) Erfinder: von Löbbecke, Maximilian, 14129 Berlin (DE)
(74) Vertreter: CLAAS Gruppe

(57) **Zusammenfassung**

Die Erfindung betrifft ein Assistenzsystem zur Ermittlung einer Gewinnprognose eines landwirtschaftlichen Feldes (F), wobei das Assistenzsystem (1) eine Datenbank (2) und eine Prognoseeinheit (3) aufweist, wobei die Datenbank (2) historische Felddaten (4) und aktuelle Felddaten (5) und erwartete Felddaten (6) umfasst, wobei die Felddaten (4, 5, 6) Feldzustandsdaten, umfassend Ertragsdaten, und Feldumgebungsdaten, umfassend die Ertragsdaten beeinflussende Umgebungsgrößen, insbesondere Störgrößen, umfassen. Es wird vorgeschlagen, dass die Datenbank (2) Ressourcendaten (8) umfasst, die Daten zu einsetzbaren Ressourcen (9, 10), aus zumindest Hilfsmitteln (9) und Betriebsmitteln (10) abbilden und dass die Prognoseeinheit (3) in einer Verknüpfungsroutine die Felddaten (4, 5, 6) und die Ressourcendaten (8) anhand eines vorgegebenen Prognosemodells (11) zur Ermittlung der Gewinnprognose verknüpft.

## Beschreibung

Die Erfindung betrifft ein Assistenzsystem zur Ermittlung einer Gewinnprognose eines landwirtschaftlichen Feldes gemäß dem Oberbegriff von Anspruch 1 sowie ein Verfahren zur Ermittlung einer Gewinnprognose eines landwirtschaftlichen Feldes gemäß dem Oberbegriff von Anspruch 15.

In den Betrachtungen der modernen Landwirtschaft sind landwirtschaftliche Felder längst als komplexe biochemische Systeme zu sehen. Das Erzielen eines optimalen Ertrags aus einem Feldbestand erfordert genaue Messungen und Prognosen über Feldzustandsdaten wie die Nährstoffaufnahme einer Pflanze und Feldumgebungsdaten wie das Wetter. Ähnlich wie bei der Regelung einer Maschine ergeben sich für einen Benutzer, im Allgemeinen einen Landwirt, vielfältige Möglichkeiten, in das System einzugreifen. Diese Möglichkeiten unterliegen komplexen Wechselwirkungen, die von historischen und aktuellen Daten abhängig sind und zukünftige Daten beeinflussen. Gleichzeitig unterliegen diese Möglichkeiten technischen, chemischen, biologischen und betriebswirtschaftlichen Randbedingungen.

Das bekannte Assistenzsystem (DE 10 2011 050 877 A1), von dem die Erfindung ausgeht, analysiert aktuelle und optimale Nährstoff-Aufnahmen von Pflanzen eines Feldbestandes und ermittelt daraus eine erforderliche Düngermenge. Dabei wird jedoch nicht berücksichtigt, dass die optimale NährstoffAufnahme des Feldbestandes nur ein nachgeordnetes Optimierungskriterium ist. Zwar kann der Benutzer so möglicherweise höhere Erträge erzielen, wenn diese jedoch mit zu hohen wirtschaftlichen Kosten einhergehen, sind sie nicht erstrebenswert. Genauso ist denkbar, dass der Benutzer nicht die Zeit oder die Maschinen hat, die optimale Düngermenge auszubringen. Die Berechnung der optimalen Düngermenge alleine erlaubt daher keine praxisgerechte Regelung des komplexen Systems eines landwirtschaftlichen Feldes.

Der Erfindung liegt das Problem zugrunde, das bekannte Assistenzsystem derart auszugestalten und weiterzubilden, dass es den Praxisanforderungen aus dem landwirtschaftlichen Bereich besser gerecht wird.

Das obige Problem wird bei einem Assistenzsystem gemäß dem Oberbegriff von Anspruch 1 durch die Merkmale des kennzeichnenden Teils von Anspruch 1 gelöst.

Wesentlich ist die grundsätzliche Überlegung, dass für einen landwirtschaftlichen Benutzer im Ergebnis nicht der Feldertrag, sondern sein betriebswirtschaftlicher Gewinn relevant ist. Es wurde nun erkannt, dass durch die Berücksichtigung von Ressourcendaten, die einsetzbare Ressourcen abbilden, in Verbindung mit Felddaten eine praxisnahe Regelung des landwirtschaftlichen Feldes ermöglicht wird.

Es wird daher ein Assistenzsystem zur Ermittlung einer Gewinnprognose eines landwirtschaftlichen Feldes vorgeschlagen, das eine Datenbank und eine Prognoseeinheit aufweist, wobei die Datenbank historische Felddaten und aktuelle Felddaten und erwartete Felddaten umfasst und wobei die Felddaten Feldzustandsdaten, umfassend Ertragsdaten, und Feldumgebungsdaten, umfassend die Ertragsdaten beeinflussende Umgebungsgrößen, umfassen.

Im Einzelnen wird vorgeschlagen, dass die Datenbank Ressourcendaten umfasst, die Daten zu einsetzbaren Ressourcen aus zumindest Hilfsmitteln und Betriebsmitteln abbilden und dass die Prognoseeinheit in einer Verknüpfungsroutine die Felddaten und die Ressourcendaten anhand eines vorgegebenen Prognosemodells zur Ermittlung der Gewinnprognose verknüpft.

Das Ziel der vorschlagsgemäßen Lehre ist es somit, einen Einblick in das System "Feld" zu ermöglichen, der die Ermittlung der tatsächlich relevante betriebswirtschaftliche Größe "Gewinn" aus den unvollständigen und vielfältigen technischen Daten ermöglicht. Erst dadurch wird eine Regelung des technischen Systems "Feld" möglich, die an den tatsächlichen Praxisanforderungen orientiert ist.

Bei der besonders bevorzugten Ausgestaltung gemäß Anspruch 2 werden in der Verknüpfungsroutine auch Planungsvorgaben berücksichtigt. So kann abgebildet werden, dass auch bereits bestehende Pläne einen signifikanten Einfluss auf das Feld und somit den zukünftigen Gewinn haben. Gleichzeitig kann so eine Bewertung der Planungsvorgaben ermöglicht werden.

Die Ausgestaltung gemäß Anspruch 3 betrifft eine von der Prognoseeinheit durchgeführte Prognoseroutine, in der Aktionsdaten ermittelt werden, die abbilden, dass diverse landwirtschaftliche Aktionen die wesentlichen Möglichkeiten für den Benutzer sind, Einfluss auf das Feld zu nehmen. Diese Aktionen wiederum verwenden Ressourcen und haben somit gleichzeitig einen positiven und einen negativen Einfluss auf die Gewinnprognose. In einer anderen bevorzugten Ausgestaltung gemäß Anspruch 3 ermittelt die Prognoseeinheit in der Prognoseroutine die Gewinnprognose, insbesondere basierend auf den Aktionsdaten.

Bei der Ausgestaltung gemäß Anspruch 4 wird in der Prognoseroutine basierend auf den Aktionsdaten der Einfluss zumindest einer der durchführbaren Aktionen auf die Ressourcen und vorzugsweise auch in Zukunft durchführbare Aktionen ermittelt. So kann berücksichtigt werden, dass aktuelle Eingriffe in das System auch Einflüsse, insbesondere durch Verbrauch oder Abnutzung, auf die einsetzbaren Ressourcen und somit durch Veränderung der in Zukunft zur Verfügung stehenden Ressourcen auch auf in Zukunft durchführbare Aktionen haben. So kann verhindert werden, dass die Gewinnprognose auf Planungsvorgaben basiert, die unter Berücksichtigung der einsetzbaren Ressourcen gar nicht durchführbar ist.

Die Ausgestaltung gemäß Anspruch 5 betrifft die Möglichkeit, dem Benutzer die verknüpften Felddaten und die Ressourcendaten und vorzugsweise die Planungsvorgaben zur Ermittlung der Gewinnprognose anzuzeigen und/oder diesen bei der Auswahl zumindest einer durchzuführenden Aktion zu unterstützen. Dadurch können die Möglichkeiten der computergestützten Datenverarbeitung mit der Fachkenntnis des Benutzers kombiniert werden, um optimale Ergebnisse zu erzielen.

Bei der Ausgestaltung gemäß Anspruch 6 kann die Prognoseeinheit in einer Steuerroutine Steuerdaten für eine landwirtschaftliche Arbeitsmaschine generieren. Insbesondere wenn das Assistenzsystem eine Aktion, beispielsweise ein Düngen des Feldes, bereits ausführlich plant, ist es vorteilhaft, wenn das Assistenzsystem direkt Steuerdaten für die landwirtschaftliche Arbeitsmaschine beispielsweise an ein Fahrerassistenzsystem der landwirtschaftlichen Arbeitsmaschine übermittelt, das darauf basierend den Benutzer wiederum bei der Durchführung der Aktion unterstützt. In einer Weiterbildung wird die Durchführung der Aktion von dem Assistenzsystem in der Datenbank dokumentiert.

Die Ansprüche 7 und 8 betreffen vorzugsweise von den Felddaten umfasste Daten, deren Einfluss auf die Ertragsdaten und/oder die Gewinnprognose besonders relevant ist.

Die Ausgestaltung gemäß Anspruch 9 betrifft die Möglichkeit, explizit Kostendaten zu berücksichtigen. Dabei ist insbesondere zu beachten, dass diese Kostendaten häufig nicht-lineare Zusammenhänge aufweisen. Kann ein Feld beispielsweise an genau einem Arbeitstag gedüngt werden, ist dies deutlich günstiger, als wenn der Düngevorgang einen Arbeitstag und 30 Minuten dauert, womit die An- und Abfahrt für die 30 min doppelt vorgenommen werden müssten. Die optimale Düngermenge ist daher nicht immer kostenoptimal.

Gemäß Anspruch 10 wird die Gewinnprognose vorzugsweise basierend auf einer Ertragsprognose und/oder einem Bodengütewert ermittelt. So kann mit wenig Aufwand ein Großteil der gewinnrelevanten Faktoren abgedeckt werden.

Insbesondere, wenn vorgesehen ist, dass das Assistenzsystem vom Benutzer im Wesentlichen unabhängig ist, kann vorgesehen sein, dass die Prognoseeinheit in der Ausgestaltung gemäß Anspruch 11 Bonitätsdaten ermittelt. So kann auch externen Akteuren ein Einblick in das landwirtschaftliche System "Feld" gewährt werden, wobei die Datenbasis von dem Assistenzsystem validiert wurde.

Wenn der Benutzer mittels des Assistenzsystems wie in Anspruch 12 vorgeschlagen, Kontrakte mit einem Kontraktpartner abschließen kann, besteht üblicherweise eine Informationsasymmetrie zwischen dem Benutzer und dem Kontraktpartner. Diese Informationsasymmetrie beruht darauf, dass der Kontraktpartner deutlich weniger Einblicke in das technische System "Feld" hat, als der Benutzer. In einer besonders bevorzugten Ausführungsform übermittelt das Assistenzsystem daher dem Kontraktpartner die Bonitätsdaten. Dadurch wird diesem Kontraktpartner ein validierter Einblick in ein ihm sonst verborgenes technisches System gewährt. Dadurch kann der Kontraktpartner Entscheidungen treffen, die über den Kontrakt wiederum Auswirkungen auf das technische System haben.

Bei der Ausgestaltung gemäß Anspruch 13 ist vorgesehen, dass die Prognoseeinheit in einer Optimierungsroutine basierend auf Optimierungskriterien interaktiv mit dem Benutzer oder automatisch die Planungsvorgaben ermittelt. Aufgrund des oben genannten Einflusses der Planungsvorgaben auf die Gewinnprognose, ist es vorteilhaft, die Planungsvorgaben unter Berücksichtigung sich daraus ergebender Teilgewinnprognosen auszuwählen und die Gewinnprognose somit zu konkretisieren.

Die Ausgestaltung gemäß Anspruch 14 betrifft die Möglichkeit, durch die Auswahl einer der durchführbaren Aktionen die Gewinnprognose schrittweise zu verbessern.

Nach einer weiteren Lehre gemäß Anspruch 15, der eigenständige Bedeutung zukommt, wird ein Verfahren zur Ermittlung einer Gewinnprognose eines landwirtschaftlichen Feldes, insbesondere mittels eines vorschlagsgemäßen Assistenzsystems, beansprucht. Auf alle Ausführungen zu dem vorschlagsgemäßen Assistenzsystem darf verwiesen werden.

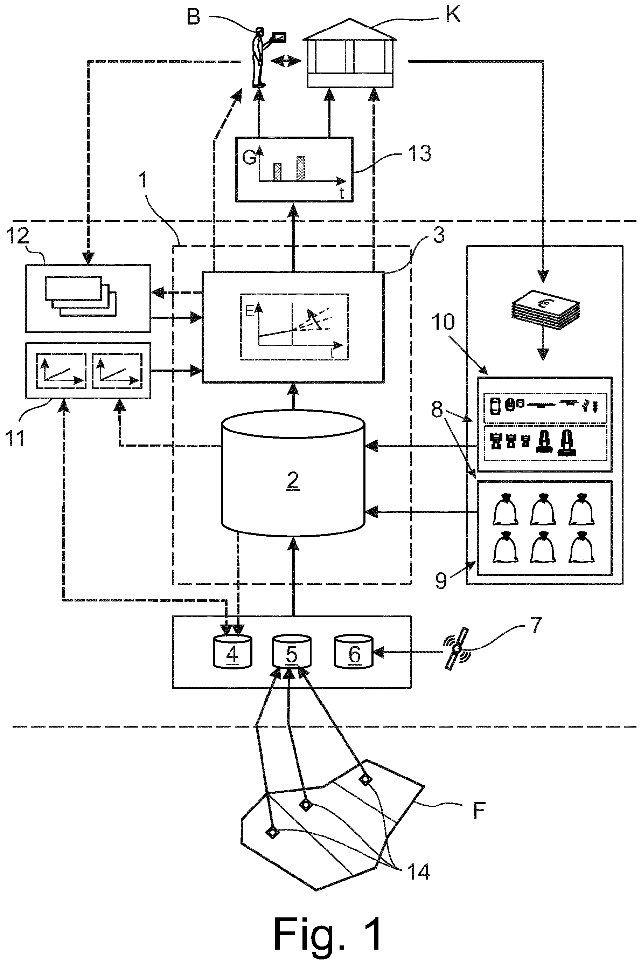

Im Folgenden wird die Erfindung anhand einer lediglich ein Ausführungsbeispiel darstellenden Zeichnung näher erläutert. In der Zeichnung zeigt
- Fig. 1: ein vorschlagsgemäßes Assistenzsystem in seinem technischen und landwirtschaftlichen Kontext.

Die Erfindung betrifft ein Assistenzsystem 1 zur Ermittlung einer Gewinnprognose eines landwirtschaftlichen Feldes F. Bei dem Assistenzsystem 1 kann es sich beispielsweise um ein rechnergestütztes System handeln wie einen Server oder ein System aus mehreren Servern und/oder Clients.

Der Gewinn umfasst hier sämtliche wirtschaftlichen Veränderungen, die mit dem Feld F im Zusammenhang stehen. Dies kann konkrete monetäre Zu- und Abflüsse betreffen, jedoch auch Wertveränderungen.

Fig. 1 stellt das vorschlagsgemäße Assistenzsystem 1 im Kontext dar. Die obere Ebene stellt dabei eine Benutzerebene dar, die mittlere Ebene ist dem Assistenzsystem 1 zugeordnet, wobei nicht alle der dort dargestellten Daten und datenquellen tatsächlich Teil des Assistenzsystems 1 sein müssen. Die untere Ebene stellt die Feldebene dar.

Das Assistenzsystem 1 weist eine Datenbank 2 auf, welche auf einem nichtflüchtigen Speicher des Assistenzsystems 1 hinterlegt ist. Das Assistenzsystem 1 weist weiter eine Prognoseeinheit 3 auf. Die Prognoseeinheit 3 weist hier und vorzugsweise einen Speicher mit Programmanweisungen und mindestens einen Prozessor zum Ausführen der Programmanweisungen auf, wobei der Speicher und die Programmanweisungen eingerichtet sind, gemeinsam mit dem Prozessor die Prognoseroutine sowie vorzugsweise die später noch genannten weiteren Routinen durchzuführen.

Die Datenbank 2 umfasst historische Felddaten 4, aktuelle Felddaten 5 und erwartete Felddaten 6 des landwirtschaftlichen Feldes F. Bei den historischen Felddaten 4 handelt es sich allgemein um in vergangenen landwirtschaftlichen Perioden erfasste Felddaten, welche insbesondere von dem Assistenzsystem 1 hinterlegt werden. Die vergangenen Perioden beziehen sich dabei insbesondere auf Ernteperioden, können aber auch andere an landwirtschaftlichen Zyklen orientierte Perioden betreffen. Die aktuellen Felddaten 5 betreffen entsprechend Felddaten der aktuellen landwirtschaftlichen Periode. Bei den erwarteten Felddaten 6 kann es sich um eine Prognose für den zukünftigen Verlauf der Felddaten handeln, welche von dem Assistenzsystem 1 erzeugt werden und/oder einem externen System 7, beispielsweise einem Wettersatelliten, bereitgestellt werden.

Die Felddaten 4, 5, 6 umfassen hierbei Feldzustandsdaten, welche Eigenschaften des Feldes F, insbesondere der Früchte und/oder des Bodens des Feldes F, abbilden. Die Feldumgebungsdaten bilden Eigenschaften der unmittelbaren und mittelbaren Umgebung des Feldes F, welche Einfluss auf landwirtschaftliche Aspekte, insbesondere einen Feldbestand, des Feldes F nehmen können, ab.

Die Feldzustandsdaten umfassen zumindest Ertragsdaten, die einen Ertrag der Früchte des Feldbestandes des Feldes F abbilden. Diese sind zumindest vor einer Ernte mit einer Unsicherheit versehen. Die Feldumgebungsdaten umfassen Umgebungsgrößen, die die Ertragsdaten beeinflussen. Dies können insbesondere Störgrößen im regelungstechnischen Sinne sein. Ein Beispiel ist das Wetter.

Wesentlich ist nun, dass die Datenbank 2 zwei Ressourcendaten 8 umfasst, die Daten zu einsetzbaren Ressourcen 9, 10 aus zumindest Hilfsmitteln 9 und Betriebsmitteln 10 abbilden.

Unter Hilfsmitteln 9 werden Ressourcen verstanden, welche eine direkte Auswirkung auf den Ertrag des Feldes F haben. Hierunter fallen unter anderem Saatgut sowie Wirkstoffe, welche auf das Feld F angewendet und insbesondere auf die Früchte und/oder den Boden aufgebracht und/oder eingebracht werden, beispielsweise Düngemittel, Wachstumsregulatoren, Erntehilfsmittel, Fungizide, Pestizide, Herbizide oder dergleichen. Unter Betriebsmitteln 10 werden Ressourcen verstanden, welche den Prozess zur Ertragserwirtschaftung möglich machen. Hierzu zählen unter anderem landwirtschaftlichen Arbeitsmaschinen sowie Teile hiervon, Werkzeuge, Verschleißteile oder dergleichen.

Wesentlich ist weiterhin, dass die Prognoseeinheit 3 in einer Verknüpfungsroutine die Felddaten 4, 5, 6 und die Ressourcendaten 8 anhand eines vorgegebenen Prognosemodells 11 zur Ermittlung der Gewinnprognose verknüpft. Das Prognosemodell 11 betrifft technische, pflanzenbiologische, den Boden betreffende und monetäre Zusammenhänge, die ursächlich für die Gewinnerzielung sind. Vorzugsweise wird das Prognosemodell 11, insbesondere durch das Assistenzsystem 1, aus den historischen Felddaten 4 ermittelt.

Hier und vorzugsweise verknüpft die Prognoseeinheit 3 in der Verknüpfungsroutine weiterhin vorbestimmte Planungsvorgaben 12 mit den Felddaten 4, 5, 6 und den Ressourcendaten 8 zur Ermittlung der Gewinnprognose.

Bei den Planungsvorgaben 12 handelt es sich um Vorgaben zumindest eines die Zukunft betreffenden landwirtschaftlichen Aspekts des Feldes F, insbesondere bezüglich der Sorte der anzubauenden Früchte, des Ertrags und/oder bezüglich der landwirtschaftlichen Aktionen betreffend das Feld F, beispielsweise eine Aussaat, eine Düngung, eine Verwendung von Pflanzenschutz oder eine Ernte. Die Planungsvorgaben 12 können hierbei angeben, dass ein oder mehrere landwirtschaftliche Aspekte allgemein realisiert werden sollen, beispielsweise dass eine bestimmte Frucht anzubauen ist. Die Planungsvorgaben 12 können ebenso zeitliche Vorgaben für landwirtschaftliche Aspekte enthalten, beispielsweise dass eine Aussaat und/oder eine Düngung in bestimmten Zeiträumen vorgenommen werden soll bzw. sollen. Die Planungsvorgaben 12 können ebenso Vorgaben bezüglich der Ressourcen 9, 10 zur Durchführung der noch zu erläuternden landwirtschaftlichen Aktionen enthalten, beispielsweise welches Saatgut und/oder welcher Wirkstoff verwendet werden soll. Die Planungsvorgaben 12 können ebenso vorgeben, dass bestimmte Ressourcen 9, 10 von der Verwendung ausgeschlossen werden sollen, beispielsweise um Erfordernisse für die ökologische Landwirtschaft einzuhalten.

Hier und vorzugsweise werden die vorbestimmten Planungsvorgaben 12 von einem Benutzer B und/oder dem Assistenzsystem 1 vorgegeben.

Es kann vorgesehen sein, dass die Prognoseeinheit 3 in der Verknüpfungsroutine die Felddaten 4, 5, 6 und die Ressourcendaten 8 und vorzugsweise die vorbestimmten Planungsvorgaben 12 zu Zustandsdaten verknüpft und dass die Prognoseeinheit 3 in einer Prognoseroutine basierend auf den Zustandsdaten Aktionsdaten ermittelt. Die Aktionsdaten bilden den Einfluss durchführbarer landwirtschaftlicher Aktionen auf die Gewinnprognose, insbesondere die Ertragsdaten, ab. Die landwirtschaftlichen Aktionen verwenden dabei Ressourcen 9, 10. Bei diesen Aktionen kann es sich um ganz unterschiedliche Aktionen handeln. Die Aktionen betreffen jedoch immer das Feld F, vorzugsweise den Boden und/oder den Feldbestand. Beispiele für derartige Aktionen sind ein Pflügen, ein Aussäen, ein Düngen, eine Schädlingsbekämpfung oder eine Ernte. Die Aktionen können das ganze Feld F oder einzelne Feldbereiche betreffen. Die Aktionen können auch vor- und/oder nachbereitende Aktionen umfassen.

Hier und vorzugsweise ermittelt die Prognoseeinheit 3 in der Prognoseroutine die Gewinnprognose. Diese Ermittlung erfolgt dann zumindest teilautomatisch, vorzugsweise vollautomatisch. Vorzugsweise ermittelt die Prognoseeinheit 3 in der Prognoseroutine die Gewinnprognose basierend auf zumindest einer der durchführbaren Aktionen. Besonders bevorzugt ist es so, dass die Prognoseeinheit 3 in der Prognoseroutine die Gewinnprognose basierend auf einer Vielzahl durchführbarer Aktionen ermittelt. Dabei kann für jede der durchführbaren Aktionen eine Teilgewinnprognose ermittelt werden. So kann der Einfluss der Aktionen auf den Gewinn abhängig von den Aktionen abgebildet werden. Beispielsweise wäre der Unterschied in Gewinn zwischen dem Durchführen einer Ernte und dem Unterlassen der Ernte extrem, so dass hier in der Gewinnprognose unterschieden werden sollte.

Hier und vorzugsweise ermittelt die Prognoseeinheit 3 in der Prognoseroutine basierend auf den Aktionsdaten den Einfluss zumindest einer der durchführbare Aktionen, vorzugsweise auch hier einer Vielzahl der durchführbaren Aktionen, auf die Ressourcen 9, 10 und vorzugsweise auf in Zukunft durchführbare Aktionen. Wie oben bereits erwähnt, hat die Durchführung von Aktionen einen nicht zu vernachlässigenden Einfluss auf in Zukunft durchführbarer Aktionen. Beispielsweise kann ein Dünger, der bei einem Düngen ausgebracht wird, in Zukunft nicht erneut ausgebracht werden, da dieser Dünger verbraucht ist. Je mehr Aktionen, Ressourcen 9, 10 und möglicherweise auch Felder F, betrachtet werden, desto komplexer und wichtiger werden diese Zusammenhänge. Greift der Benutzer B somit durch Aktionen in das technische System "Feld" ein, sollten dabei historische, vergangene, aktuelle und zukünftige Aktionen berücksichtigt werden.

Um nun aus den verknüpften Daten tatsächlich die Gewinnprognose, in Fig. 1 durch die Gewinnprognosedaten 13 dargestellt, zu ermitteln, gibt es unterschiedliche Möglichkeiten. Es kann vorgesehen sein, dass das Assistenzsystem 1 dem Benutzer B die verknüpften Felddaten 4, 5, 6 und Ressourcendaten 8 und vorzugsweise die vorbestimmten Planungsvorgaben 12 zur Ermittlung der Gewinnprognose anzeigt. Dadurch, dass diese Daten mittels des Prognosemodells 11 verknüpft angezeigt werden, kann die Expertise des Benutzers B vorteilhaft eingebunden werden, um aus der technischen Zustandsanzeige des System "Feld" in Form der verknüpften Daten die Ermittlung der Gewinnprognose zu ermöglichen. Genauso vorteilhaft kann zusätzlich oder alternativ vorgesehen sein, dass das Assistenzsystem 1 dem Benutzer B die Zustandsdaten zur Ermittlung der Gewinnprognose anzeigt.

Anhand der Gewinnprognose, aber auch während der Prognoseroutine zur Ermittlung der Gewinnprognose kann vorgesehen sein, dass das Assistenzsystem 1 den Benutzer B die Aktionsdaten zur Auswahl zumindest einer durchzuführenden Aktion anzeigt und/oder dass das Assistenzsystem 1 dem Benutzer B mindestens eine Aktion zur Durchführung vorschlägt. Sofern das Assistenzsystem 1 dem Benutzer B eine Aktion zur Durchführung vorschlägt, ist diese vorzugsweise hinsichtlich eines noch zu erläuternden Optimierungskriteriums optimiert. Die Optimierung kann sich auf die Auswahl aber auch auf eine Parametrierung der Aktion beziehen. Vorzugsweise wählt der Benutzer B, wie noch erläutert wird, eine Aktion zur Durchführung aus und erzeugt somit eine neue Planungsvorgabe 12.

Zur weiteren Unterstützung des Benutzers B kann vorgesehen sein, dass die Prognoseeinheit 3 in einer Steuerroutine Steuerdaten für eine landwirtschaftliche Arbeitsmaschine zur Ansteuerung der landwirtschaftlichen Arbeitsmaschine während der Durchführung der Aktion generiert. Beispielsweise kann die landwirtschaftliche Arbeitsmaschine ebenfalls ein Fahrerassistenzsystem aufweisen, dass ganz allgemein der Ansteuerung dieser landwirtschaftlichen Arbeitsmaschine dient. Das vorschlagsgemäße Assistenzsystem 1 kann dann die Steuerdaten an dieses Fahrerassistenzsystem der landwirtschaftlichen Arbeitsmaschine übermitteln, um diesem Fahrerassistenzsystem Details zur Durchführung der Aktion mitzuteilen. Beispielsweise könnte die Aktion eine Feldbereich-spezifische Düngung sein, die dann entsprechend automatisch von dem Fahrerassistenzsystem der landwirtschaftlichen Arbeitsmaschine umgesetzt werden könnte.

Vorzugsweise dokumentiert das Assistenzsystem 1 die Durchführung der Aktion basierend auf Sensordaten der landwirtschaftlichen Arbeitsmaschine in einer Dokumentationsroutine in der Datenbank 2. In Fig. 1 sind, stellvertretend für die Sensoren der landwirtschaftlichen Arbeitsmaschine und weitere Sensoren, Sensoren 14 ohne landwirtschaftliche Arbeitsmaschine auf dem Feld F gezeigt.

Den Sensordaten kommt, unabhängig von ihrer Herkunft, eine hohe Bedeutung zu. Einerseits bilden die Sensordaten hier und vorzugweise die Grundlage für die aktuellen Felddaten 5, insbesondere die aktuellen Feldzustandsdaten, und andererseits kann vorgesehen sein, dass zumindest einige Sensordaten über einen längeren Zeitraum in der Datenbank 2 abgespeichert werden. Sie können dann eine Grundlage für die noch zu erläuternde Validierungsroutine bieten.

Die Feldzustandsdaten umfassen hier und vorzugsweise Fruchtdaten und/oder Bodendaten, insbesondere Nährstoffdaten und/oder Schädlingsdaten. Wie bereits angedeutet, werden die Feldzustandsdaten vorzugsweise von mindestens einem Sensor 14, insbesondere einem Sensor einer landwirtschaftlichen Arbeitsmaschine, ermittelt.

Die Feldumgebungsdaten umfassen hier und vorzugsweise Wetterdaten und/oder Schädlingsdaten. Insbesondere umfassen die Feldzustandsdaten vorzugsweise tatsächliche Schädlingsdaten, wie einen Schädlingsbefall, während die Feldumgebungsdaten potentielle Schädlingsdaten umfassen, insbesondere einen potentiellen Schädlingsbefall, beispielsweise einen Schädlingsbefall eines benachbarten Feldes F.

Hier und vorzugsweise umfassen die Ressourcendaten 8 Ressourcenkostendaten. Die Prognoseeinheit 3 ermittelt dann vorzugsweise in der Prognoseroutine basierend auf den Ressourcenkostendaten Aktionskostendaten zumindest einer der durchführbaren Aktionen. Vorzugsweise ermittelt die Prognoseeinheit 3 in der Prognoseroutine Kostendaten zu einer Vielzahl der durchführbaren Aktionen. Die Aktionskostendaten und/oder die Ressourcenkostendaten können dabei ganz unterschiedliche Kosten umfassen. Dies ist zum einen Arbeitszeit, ein Verbrauch an Betriebsmitteln 10 oder Verschleiß der Betriebsmittel 10, eine Miete, beispielsweise von landwirtschaftlichen Arbeitsmaschinen und dergleichen. Hier und vorzugsweise ermittelt die Prognoseeinheit 3 in der Prognoseroutine basierend auf den Aktionskostendaten die Gewinnprognose. Dabei werden die Aktionskostendaten vorzugsweise bei der Ermittlung der Teilgewinnprognosen der jeweiligen Aktion berücksichtigt.

Hier und vorzugsweise ermittelt die Prognoseeinheit 3 in der Prognoseroutine eine Ertragsprognose des Feldbestandes des Feldes F basierend auf den Zustandsdaten. Basierend auf der Ertragsprognose ermittelt die Prognoseeinheit 3 in der Prognoseroutine vorzugsweise die Gewinnprognose. Zusätzlich oder alternativ ermittelt die Prognoseeinheit 3 in der Prognoseroutine basierend auf den Zustandsdaten vorzugsweise einen Bodengütewert und basierend auf dem Bodengütewert die Gewinnprognose. Während die Ertragsprognose, die den Ertrag des abgeernteten Feldbestandes nach der Ernte betrifft, selbsterklärend ist, wird über den Bodengütewert abgedeckt, dass auch der Boden, insbesondere für zukünftige Perioden, einen schwankenden Wert aufweisen kann. Wird der Ertrag in einer Periode auf Kosten des Bodens zu sehr erhöht, hat dies einen negativen Einfluss auf zukünftige Perioden und fließt somit in den Bodengütewert ein.

Während die oben genannten Vorteile bisher vor allem den Benutzer B betreffen, ist es mit dem vorschlagsgemäßen Assistenzsystem 1 auch möglich, externen Parteien Einblicke in das System "Feld" zu gewähren. Diese Einblicke ermöglichen den externen Parteien wieder, Entscheidungen zu treffen, die im Zusammenspiel mit dem Benutzer B zu neuen Möglichkeiten an Eingriffen in das technische System "Feld" in Form von Aktionen führen.

Hier und vorzugsweise ist dafür vorgesehen, dass die Prognoseeinheit 3 in einer Validierungsroutine aktuelle Feldzustandsdaten basierend auf den Zustandsdaten validiert und vorzugweise, dass die Prognoseeinheit 3 in der Validierungsroutine Bonitätsdaten basierend auf den validierten Zustandsdaten ermittelt. Die aktuellen Feldzustandsdaten sind in diesem Fall vorzugsweise Ertragsdaten, die einen direkten Wert darstellen, der für Außenstehende jedoch schwer zu bewerten ist. In die Bonitätsdaten können jedoch auch andere Werte, insbesondere der Bodengütewert, die Ertragsprognose, die Gewinnprognose, Maschinenwerte und dergleichen einfließen.

Es ist hier und vorzugsweise vorgesehen, dass der Benutzer B mittels des Assistenzsystems 1 Verkaufskontrakte, insbesondere Terminkontrakte, und/oder Ankaufskontrakte und/ oder Finanzierungskontrakte basierend auf den Zustandsdaten und/oder der Gewinnprognose und/oder der Ertragsprognose mit einem Kontraktpartner K abschließen kann. Der Kontraktpartner K kann eine Bank, ein Lieferant oder ein Ankäufer beispielsweise für Erntegut sein. Der Benutzer B kann somit über Verkaufskontrakte seine Erträge verkaufen.

Interessant ist nun, dass das Assistenzsystem 1 hier und vorzugsweise dem Kontraktpartner K die Bonitätsdaten übermittelt.

Dem Kontraktpartner K werden somit einzigartige Einblicke in das technische System "Feld" gewährt. Diese Einblicke kann der Kontraktpartner K nutzen, um die Bonität des Benutzers B zu bewerten. Basierend auf dieser Bonität kann der Kontraktpartner K dann wiederum beispielsweise einen Finanzierungskontrakt für Hilfsmittel 9 oder Betriebsmittel 10 mit dem Benutzer B abschließen. Diese Hilfsmittel 9 oder Betriebsmittel 10 kann der Benutzer B dann wiederrum nutzen, um landwirtschaftliche Aktionen durchzuführen, die die Gewinnprognose positiv beeinflussen. Dabei kann die Planungsvorgabe 12, diese Aktionen durchführen zu wollen, bereits in die Bonitätsdaten eingegangen sein, wodurch der Kontraktpartner K genau beurteilen kann, ob er die Aktionen finanzieren möchte.

Dieses Beispiel zeigt auch, wie die historischen Felddaten 4 und die aktuellen und Felddaten 5 die erwarteten Felddaten 6 miteinander verknüpft werden können. Insofern kann aus den historischen Felddaten 4 nicht nur das Prognosemodell 11 extrapoliert werden, sondern es wird auch möglich, in der Validierungsroutine die aktuellen Feldzustandsdaten mit historischen Feldzustandsdaten zu vergleichen. Die historischen Feldzustandsdaten können hier beispielsweise aus einer spektralen Bildanalyse mittels eines Satelliten stammen, jedoch genauso vorteilhaft bereits im Assistenzsystem 1 aus vergangenen Perioden hinterlegt sein. Werden dann beispielsweise vergangene Wetterdaten und erwartete Wetterdaten hinzugezogen, lässt sich in der Gewinnprognose und/oder den Bonitätsdaten für den Kontraktpartner K das Risiko eines Ausfalls direkt anhand der technischen Daten abbilden. Erst dadurch entstehen für den Benutzer B neue mögliche durchführbare Aktionen, mit denen er wiederrum in das System "Feld" eingreifen kann.

Um den Benutzer B nicht nur eine Gewinnprognose zu liefern, sondern ihm auch optimierte Eingriffe zu ermöglichen, die die Gewinnprognose erhöhen, ist hier und vorzugsweise vorgesehen, dass die Prognoseeinheit 3 in einer Optimierungsroutine basierend auf Optimierungskriterien interaktiv mit dem Benutzer B oder automatisch die Planungsvorgaben 12 ermittelt, insbesondere vorbestimmt. Das Vorbestimmen bezieht sich hier darauf, dass diese Planungsvorgaben 12 vorzugsweise die gleichen Planungsvorgaben 12 sind, die wiederrum in die Verknüpfungsroutine eingehen.

Die Optimierungskriterien weisen insbesondere mehrere Teilkriterien auf, welche jeweils im Rahmen der Optimierungsroutine optimiert werden. Vorzugsweise handelt es sich bei den Optimierungskriterien oder einem Teilkriterium hierum um eine Maximierung, eine Minimierung, ein Einhalten eines Mindestwerts oder ein Einhalten eines Maximalwerts einer Größe, beispielsweise des Ertrags des Feldes F.

Hier und vorzugsweise sind die Optimierungskriterien vom Benutzer B auswählbar aus der Liste umfassend zumindest Gewinnmaximierung und/oder Bodenschonung und/oder Wasserschonung und/oder Umweltschonung und/oder Finanzierungsbedarfsminimierung und/oder Risikominimierung. Hier und vorzugsweise kann eine Gewichtung der Optimierungskriterien und/oder der Teilkriterien vorgenommen werden.

Hier und vorzugsweise kann der Benutzer B oder die Prognoseeinheit 3 eine der durchführbaren Aktionen zur Durchführung auswählen. Die Prognoseeinheit 3 ermittelt dann in der Prognoseroutine die Gewinnprognose basierend auf der durchzuführenden Aktion. Hier und vorzugsweise führt die Prognoseeinheit 3 basierend auf der durchzuführenden Aktion eine weitere Prognoseroutine durch. Diese weitere Prognoseroutine kann einige oder alle der bisher genannten Schritte umfassen. Es kann auch vorgesehen sein, dass eine weitere der bisher genannten Routinen erneut durchgeführt wird. Dadurch soll eine schrittweise Planung, beispielsweise einer gesamten Periode, ermöglicht werden. Der Benutzer B kann sukzessive auch mit größerem zeitlichem Abstand über die Periode und somit mit neuen verfügbaren Daten die Planung Stück für Stück verfeinern.

Hier und vorzugsweise vergleicht die Prognoseeinheit 3 historische Ertragsprognosen und/oder historische Gewinnprognosen mit tatsächlich eingetretenen Gewinnen und optimiert basierend auf dem Vergleich die Prognoseroutine, insbesondere selbstlernend.

Nach einer weiteren Lehre, der eigenständige Bedeutung zukommt, wird ein Verfahren zur Ermittlung einer Gewinnprognose eines landwirtschaftlichen Feldes F mittels eines, insbesondere vorschlagsgemäßen, Assistenzsystems 1 beansprucht. Auf alle Ausführungen zu dem vorschlagsgemäßen Assistenzsystem 1 darf verwiesen werden.

Auch bei dem vorschlagsgemäßen Verfahren weist das Assistenzsystem 1 eine Datenbank 2 und eine Prognoseeinheit 3 auf. Die Datenbank 2 umfasst historische Felddaten 4 und aktuelle Felddaten 5 und erwartete Felddaten 6. Die Felddaten umfassen Feldzustandsdaten und Feldumgebungsdaten. Die Feldzustandsdaten umfassen Ertragsdaten und die Feldumgebungsdaten umfassen die ertragsdatenbeeinflussende Umgebungsgrößen, insbesondere Störgrößen.

Wesentlich ist nun, dass die Datenbank 2 Ressourcendaten 8 umfasst, die Daten zu einsetzbaren Ressourcen 9, 10, umfassend Hilfsmittel 9 und Betriebsmittel 10, umfassen und dass die Prognoseeinheit 3 in einer Verknüpfungsroutine die Felddaten 4, 5, 6 und die Ressourcendaten 8 zur Ermittlung der Gewinnprognose verknüpft.

Insbesondere darf bei dem vorschlagsgemäßen Verfahren auf alle der genannten Routinen verwiesen werden.

### Bezugszei chenliste

- 1: Assistenzsystem
- 2: Datenbank
- 3: Prognoseeinheit
- 4: historische Felddaten
- 5: aktuelle Felddaten
- 6: erwartete Felddaten
- 7: externes System
- 8: Ressourcendaten
- 9: Hilfsmittel
- 10: Betriebsmittel
- 11: Prognosemodell
- 12: Planungsvorgaben
- 13: Gewinnprognosedaten
- 14: Sensoren
- F: Feld
- B: Benutzer
- K: Kontraktpartner

## Patentansprüche

1. Assistenzsystem zur Ermittlung einer Gewinnprognose eines landwirtschaftlichen Feldes (F),
wobei das Assistenzsystem (1) eine Datenbank (2) und eine Prognoseeinheit (3) aufweist,
wobei die Datenbank (2) historische Felddaten (4) und aktuelle Felddaten (5) und erwartete Felddaten (6) umfasst, wobei die Felddaten (4, 5, 6) Feldzustandsdaten, umfassend Ertragsdaten, und Feldumgebungsdaten, umfassend die Ertragsdaten beeinflussende Umgebungsgrößen, insbesondere Störgrößen, umfassen,
**dadurch gekennzeichnet,**
**dass** die Datenbank (2) Ressourcendaten (8) umfasst, die Daten zu einsetzbaren Ressourcen (9, 10), aus zumindest Hilfsmitteln (9) und Betriebsmitteln (10) abbilden und dass die Prognoseeinheit (3) in einer Verknüpfungsroutine die Felddaten (4, 5, 6) und die Ressourcendaten (8) anhand eines vorgegebenen Prognosemodells (11) zur Ermittlung der Gewinnprognose verknüpft.

2. Assistenzsystem nach Anspruch 1, **dadurch gekennzeichnet, dass** die Prognoseeinheit (3) in der Verknüpfungsroutine weiterhin vorbestimmte Planungsvorgaben (12) mit den Felddaten (4, 5, 6) und den Ressourcendaten (8) zur Ermittlung der Gewinnprognose verknüpft, vorzugsweise, dass die vorbestimmten Planungsvorgaben (12) von einem Benutzer (B) und/oder dem Assistenzsystem (1) vorgegeben werden.

3. Assistenzsystem nach Anspruch 1 oder 2, **dadurch gekennzeichnet, dass** die Prognoseeinheit (3) in der Verknüpfungsroutine die Felddaten (4, 5, 6) und die Ressourcendaten (8) und vorzugsweise die vorbestimmten Planungsvorgaben (12) zu Zustandsdaten verknüpft und dass die Prognoseeinheit (3) in einer Prognoseroutine basierend auf den Zustandsdaten Aktionsdaten ermittelt, die den Einfluss durchführbarer, landwirtschaftlicher, die Ressourcen (9, 10) verwendender Aktionen auf die Gewinnprognose, insbesondere die Ertragsdaten, abbilden, und/oder, dass die Prognoseeinheit (3) in der Prognoseroutine die Gewinnprognose, vorzugsweise basierend auf zumindest einer der durchführbaren Aktionen, ermittelt.

4. Assistenzsystem nach Anspruch 3, **dadurch gekennzeichnet, dass** die Prognoseeinheit (3) in der Prognoseroutine basierend auf den Aktionsdaten den Einfluss zumindest einer der durchführbaren Aktionen auf die Ressourcen (9, 10) und vorzugsweise auf in Zukunft durchführbare Aktionen ermittelt.

5. Assistenzsystem nach einem der vorhergehenden Ansprüche, **dadurch gekennzeichnet, dass** das Assistenzsystem (1) dem Benutzer (B) die verknüpften Felddaten (4, 5, 6) und die Ressourcendaten (8) und vorzugsweise die Planungsvorgaben (12) zur Ermittlung der Gewinnprognose anzeigt, und/oder, dass das Assistenzsystem (1) dem Benutzer (B) die Zustandsdaten zur Ermittlung der Gewinnprognose anzeigt, und/oder, dass das Assistenzsystem (1) dem Benutzer (B) die Aktionsdaten zur Auswahl zumindest einer durchzuführenden Aktion anzeigt und/oder, dass das Assistenzsystem (1) dem Benutzer (B) mindestens eine Aktion zur Durchführung vorschlägt.

6. Assistenzsystem nach einem der Ansprüche 3 bis 5, **dadurch gekennzeichnet, dass** die Prognoseeinheit (3) in einer Steuerroutine Steuerdaten für eine landwirtschaftliche Arbeitsmaschine zur Ansteuerung der landwirtschaftlichen Arbeitsmaschine während der Durchführung der Aktion generiert, vorzugsweise dass das Assistenzsystem (1) die Durchführung der Aktion basierend auf Sensordaten der landwirtschaftlichen Arbeitsmaschine in einer Dokumentationsroutine in der Datenbank (2) dokumentiert.

7. Assistenzsystem nach einem der vorhergehenden Ansprüche, **dadurch gekennzeichnet, dass** die Feldzustandsdaten Fruchtdaten und/oder Bodendaten, insbesondere Nährstoffdaten, und/oder Schädlingsdaten umfassen, und/oder, dass die Feldzustandsdaten von mindestens einem Sensor (14), insbesondere einem Sensor einer landwirtschaftlichen Arbeitsmaschine, ermittelt werden.

8. Assistenzsystem nach einem der vorhergehenden Ansprüche, **dadurch gekennzeichnet, dass** die Feldumgebungsdaten Wetterdaten und/oder Schädlingsdaten umfassen.

9. Assistenzsystem nach einem der vorhergehenden Ansprüche, **dadurch gekennzeichnet, dass** die Ressourcendaten (8) Ressourcenkostendaten umfassen und dass die Prognoseeinheit (3) in der Prognoseroutine basierend auf den Ressourcenkostendaten Aktionskostendaten zu mindestens einer der durchführbaren Aktionen ermittelt, vorzugsweise, dass die Prognoseeinheit (3) in der Prognoseroutine basierend auf den Aktionskostendaten die Gewinnprognose erm ittelt.

10. Assistenzsystem nach einem der vorhergehenden Ansprüche, **dadurch gekennzeichnet, dass** die Prognoseeinheit (3) in der Prognoseroutine eine Ertragsprognose eines Feldbestands des Feldes (F) basierend auf den Zustandsdaten ermittelt und basierend auf der Ertragsprognose die Gewinnprognose ermittelt, und/oder, dass die Prognoseeinheit (3) in der Prognoseroutine basierend auf den Zustandsdaten einen Bodengütewert ermittelt und basierend auf dem Bodengütewert die Gewinnprognose ermittelt.

11. Assistenzsystem nach einem der vorhergehenden Ansprüche, **dadurch gekennzeichnet, dass** die Prognoseeinheit (3) in einer Validierungsroutine aktuelle Feldzustandsdaten basierend auf den Zustandsdaten validiert und vorzugsweise, dass die Prognoseeinheit (3) in der Validierungsroutine Bonitätsdaten basierend auf den validierten Zustandsdaten ermittelt.

12. Assistenzsystem nach einem der vorhergehenden Ansprüche, **dadurch gekennzeichnet, dass** der Benutzer (B) mittels des Assistenzsystems (1) Verkaufskontrakte, insbesondere Terminkontrakte, und/oder Ankaufskontrakte und/oder Finanzierungskontrakte basierend auf den Zustandsdaten und/oder der Gewinnprognose und/oder der Ertragsprognose mit einem Kontraktpartner (K) abschließen kann, vorzugsweise, dass das Assistenzsystem (1) dem Kontraktpartner (K) die Bonitätsdaten übermittelt.

13. Assistenzsystem nach einem der Ansprüche 2 bis 12, **dadurch gekennzeichnet, dass** die Prognoseeinheit (3) in einer Optimierungsroutine basierend auf Optimierungskriterien interaktiv mit dem Benutzer (B) oder automatisch die Planungsvorgaben (12) ermittelt, vorzugsweise, dass die Optimierungskriterien vom Benutzer (B) auswählbar sind aus der Liste umfassend zumindest Gewinnmaximierung und/oder Bodenschonung und/oder Wasserschonung und/oder Umweltschonung und/oder Finanzierungsbedarfsminimierung und/oder Risikominimierung, weiter vorzugsweise, dass die Optimierungskriterien vom Benutzer (B) gewichtet werden können.

14. Assistenzsystem nach einem der Ansprüche 3 bis 13, **dadurch gekennzeichnet, dass** der Benutzer (B) oder die Prognoseeinheit (3) eine der durchführbaren Aktionen zur Durchführung auswählen kann und dass die Prognoseeinheit (3) in der Prognoseroutine die Gewinnprognose basierend auf der durchzuführenden Aktion ermittelt, vorzugsweise, dass die Prognoseeinheit (3) basierend auf der durchzuführenden Aktion eine weitere Prognoseroutine durchführt.

15. Verfahren zur Ermittlung einer Gewinnprognose eines landwirtschaftlichen Feldes (F) mittels eines Assistenzsystems (1) insbesondere nach einem der vorhergehenden Ansprüche,
wobei das Assistenzsystem (1) eine Datenbank (2) und eine Prognoseeinheit (3) aufweist,
wobei die Datenbank (2) historische Felddaten (4) und aktuelle Felddaten (5) und erwartete Felddaten (6) umfasst, wobei die Felddaten (4, 5, 6) Feldzustandsdaten, umfassend Ertragsdaten, und Feldumgebungsdaten, umfassend die Ertragsdaten beeinflussende Umgebungsgrößen, insbesondere Störgrößen, umfassen,
**dadurch gekennzeichnet,**
**dass** die Datenbank (2) Ressourcendaten (8) umfasst, die Daten zu einsetzbaren Ressourcen (9, 10), umfassend Hilfsmittel (9) und Betriebsmittel (10), umfassen und dass die Prognoseeinheit (3) in einer Verknüpfungsroutine die Felddaten (4, 5, 6) und die Ressourcendaten (8) zur Ermittlung der Gewinnprognose verknüpft.
